# EUROPEAN PATENT APPLICATION

(11) **EP 2 355 383 A1**
(43) Date of publication of application: **10.08.2011**
(21) Application number: 09824356.1
(22) Date of filing: 14.07.2009
(51) Int. Cl.: H04H 60/25

(54) **METHOD AND TERMINAL FOR REALIZING THE UPDATE OF MOBILE MULTIMEDIA BROADCASTING ELECTRONIC SERVICE GUIDE**

(30) Priority: 05.11.2008 CN 200810173666
(71) Applicant: ZTE Corporation, Shenzhen, Guangdong 518057 (CN)
(72) Inventor: WANG, Zemin, Shenzhen Guangdong 518057 (CN)
(74) Representative: Bokinge, Ole
(86) International application number: PCT/CN2009/072750
(87) International publication number: WO 2010/051701

(57) **Abstract**

A method for implementing update of mobile multimedia broadcasting ESG is disclosed in the present invention. The method comprises: upon receiving an ESG, a terminal storing the ESG and time information about reception of the ESG this time; when receiving an ESG again, the terminal judging whether condition for complete ESG update is met according to time information about reception of the ESG this time and the time information about reception of the ESG last time stored in the terminal, if yes, the terminal completely updating the ESG stored therein to the ESG received this time; otherwise the terminal judging whether a value of an ESG update indication carried in the ESG is the same with that of an ESG update indication in the ESG stored therein, if no, updating ESG information that has changed in the terminal. The present invention efficiently achieves operation of ESG update of the terminal.

## Description

### Technical Field

The present invention relates to the technology of a method and terminal for updating China Mobile Multimedia Broadcasting (CMMB) Electronic Service Guide (ESG), and in particular, to a method and terminal for implementing update of CMMB ESG.

### Background Art

With the popularization of mobile data service, improvement of mobile phone performance and rapid development of digital TV technology and network, mobile TV services for watching TV using a smart phone having an operating system and video function have drawn people's extensive attention. Since the popularizing rate of mobile phone possession is high and a mobile phone has characteristics such as portability, mobile TV services have shown more extensive influence than conventional TV.

As a hot point of development, mobile TV is about to enter a period of large-scale application. DVB-H (Digital Video Broadcasting Handheld) of European standards and T-DMB (Terrestrial-Digital Multimedia Broadcast) of Korea standards are two influential standards abroad. In China, the industry standards CMMB issued by State Administration of Radio, Film, and Television, as an influential mobile TV standard, has attracted a lot of attention in this industry since it has fully independent intellectual property. Meanwhile, the industrial chain related to CMMB has begun to take shape and has gained preliminary victory in the competition among current national mobile TV standards thanks to the initiation of the broadcast and TV system and active participation of communication operators.

In CMMB, ESG includes the information about the currently available services. According to this information, a user can select services in which he is interested and find out the related TV data information. And update of the ESG enables a user to obtain the latest service information in time, and thus is an important part in realization of ESG function. With regards to update of the ESG, it is realized through an ESG update sequence number field in CMMB standards, which obviously provides much convenience for ESG update at the side of a mobile phone as compared with the ESG update in DVB-H standards. As for the method for realizing ESG update through an ESG update sequence number field, please refer to patents CN200710147987.X and CN200710072904, etc., and it will not be described here in order to avoid redundancy.

As for ESG update when the mobile phone is powered on, it is generally implemented by receiving ESG again in the current practice. In this way, the flow of ESG update when the mobile phone is powered on is simplified and is also easy to be carried out; but on the other hand, when ESG update is not too much, it needs to take much time to receive and analyze ESG, and this will directly cause dissatisfaction of user experience when ESG information is of great varieties.

Especially, in the method for ESG update disclosed by patent CN200710072904, ESG update sequence number is directly used to indicate whether the ESG has been updated, and it is generally a good method to judge whether ESG table or sub-table has been updated by comparing it with ESG basic description table. However, the indication field is a 4-bit field and is taken from 0-15 in a circular manner, meanwhile, the time of powering off of a user is something indefinite and the case of user roaming may arise (involving charging of mobile TV programs, possibly even including charging of receiving ESG information) when the mobile phone is powered on again after powering off, in which case, an abnormal event that the ESG update sequence number is not changed but the ESG has actually been updated may occur if ESG is updated only by means of the ESG update sequence number; or a problem that comparing the ESG basic description table will consume time and resources of the system may arise when ESG information is updated with a large amount of information or is completely substituted.

### Summary of the Invention

The technical problem to be solved by the present invention is to provide a method and a terminal for implementing ESG update in CMMB so that the terminal can implement the operation of updating an ESG efficiently and accurately.

In order to solve the above problem, the present invention provides a method for implementing update of mobile multimedia broadcasting Electronic Service Guide (ESG), comprising the following steps of:
upon receiving an ESG, a terminal storing the ESG and time information about receiving the ESG this time;
when receiving an ESG again, the terminal judging whether a condition for complete ESG update is met or not according to time information about receiving the ESG this time and the time information about receiving the ESG last time stored in the terminal, if yes, the terminal completely updating the ESG stored therein to the ESG received this time; otherwise the terminal judging whether a value of an ESG update indication carried in the ESG is the same with that of an ESG update instruction in the ESG stored therein or not, if not, updating ESG information that has changed in the terminal.

Furthermore, after the terminal completely updating the ESG stored therein to the ESG received this time, after using the ESG stored in the terminal or after updating the ESG information that has changed in the terminal, the method further comprises the following step of:
the terminal updating the time information stored therein to the time information of the ESG received this time.

Furthermore, the condition for complete ESG update is: a value of the difference between the time information of the ESG received by the terminal again and the time information of the ESG received last time stored in the terminal is greater than a threshold predefined in the terminal, or the time information of the ESG received by the terminal again and the time information of the ESG received last time stored in the terminal are located at two sides of an updating time critical point predefined in the terminal.

Furthermore, before the terminal judges whether a condition for complete ESG update is met or not according to time information about receiving the ESG this time and the time information about receiving the ESG last time stored in the terminal when receiving an ESG again, the method further comprises the following steps of: the terminal judging whether a value of a network update indication carried in the ESG received this time is the same with that of a network update instruction carried in the ESG stored therein that is received last time, if yes, the terminal executing the step of judging whether the time information about receiving the ESG this time and the time information about receiving the ESG last time stored in the terminal meet the condition for complete ESG update or not; otherwise, the terminal completely updating the ESG stored therein to the ESG received this time and ending the method.

Preferably, the method comprises the following step of: the terminal not updating the ESG stored therein if the terminal determines that the value of the ESG update indication carried in the ESG is the same with that of the ESG update indication in the ESG stored therein.

Preferably, the threshold predefined in the terminal is 24 hours, and the updating time critical point is 0 o'clock.

A terminal for implementing update of a mobile multimedia broadcasting Electronic Service Guide (ESG), comprising a storing module, an updating module, a time information judging module and an update indication judging module, wherein,
the storing module is used to store an ESG and time information about receiving the ESG this time after receiving the ESG; also used to store an updated ESG;
the updating module is used to completely update the ESG stored therein to an ESG received this time after receiving an updating command;
the time information judging module is used to judge whether the condition for complete ESG update is met according to the time information about receiving an ESG this time and time information about receiving an ESG last time stored in the terminal, if yes, sending the updating command to the updating module; otherwise, sending a judging command to the update indication judging module;
the update indication judging module is used to judge whether a value of an ESG update indication carried in the ESG received this time is the same with that of an ESG update indication in the ESG stored therein that is received last time after receiving the judging command, and sending the updating command to the updating module if determining that the values are not the same.

Furthermore, the updating module is also used to update the time information stored therein to the time information of the ESG received this time;
the storing module is also used to store time information of an updated ESG.

Furthermore, the condition for complete ESG update is: a value of the difference between the time information of the ESG received by the terminal again and the time information of the ESG received last time stored in the terminal is greater than a threshold predefined in the terminal, or the time information of the ESG received by the terminal again and the time information of the ESG received last time stored in the terminal are located at two sides of an updating time critical point predefined in the terminal.

Preferably, the terminal further comprises a network update indication judging module; the network update indication judging module is used to compare the value of a network update indication carried in the ESG received by the terminal this time with the value of a network update indication in the ESG stored therein, and if they are not the same, the network update indication judging module is used to send the updating command to the updating module; otherwise, the network update indication judging module is used to send a judging command to the time information judging module to instruct the time information judging module to perform subsequent judgment.

Preferably, the threshold predefined in the terminal is 24 hours, and the updating time critical point is 0 o'clock.

As may be seen from the above content, the present invention fully uses the network information table update sequence number field and ESG update sequence number field in CMMB standards to confirm whether the home location of the network has changed or the ESG information has been updated; meanwhile, an efficient updating strategy is achieved between partial update and complete update based on the extent to which the ESG information is updated, which does not only avoid time consumption for ESG information reception and analysis caused by complete re-reception/update when the ESG information is only partially updated, but also avoid repeated comparison work on the ESG basic description table when most part of the ESG information is updated, thus efficiently achieving operation of ESG update of the terminal.

### Brief Description of Drawings

FIG. 1 illustrates the flow of the method for implementing ESG update according to the present invention;
FIG. 2 illustrates the structure of a multiplex frame header according to the present invention;
FIG. 3 illustrates the flow of ESG powering-on update processing according to the present invention;
FIG. 4 illustrates the structure of the terminal for implementing ESG update according to the present invention.

### Preferred Embodiments of the Invention

The specific embodiments of the present invention will be described below in further detail with reference to the drawings.

The main idea of the present invention is that when most of the ESG information is to be updated, the terminal adopts an update mode of complete re-reception; when the ESG information is to be partially updated, the ESG table and sub-table that have been updated are searched through an ESG update indication to implement partial update; meanwhile when the home location of the network has changed, a more reasonable ESG update mode will be adopted.

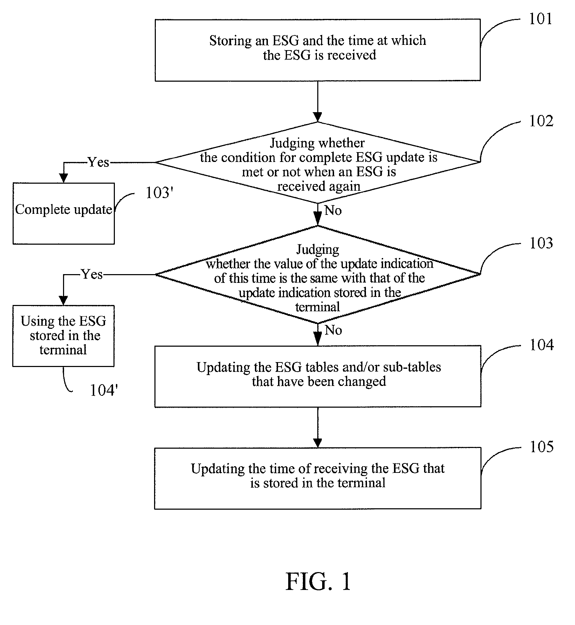

The flow of the method for implementing ESG update according to the present invention is as shown in FIG. 1, mainly including the following steps of:
Step 101: a terminal storing an ESG and time information about receiving the ESG this time upon receiving the ESG;

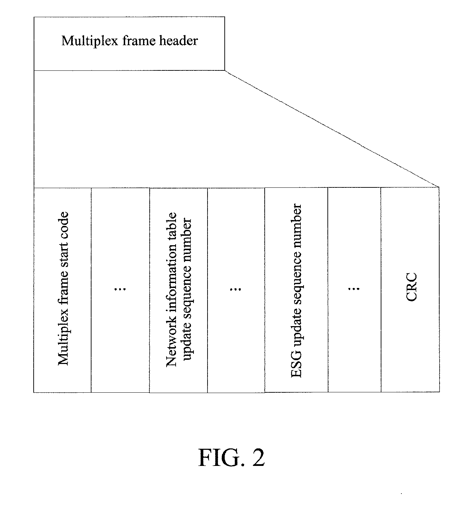

In CMMB, the function of multiplexing is to encapsulate and arrange information such as audio, video, data and ESG so as to make them transmittable on mobile multimedia broadcasting channels; and a multiplex frame consists of a multiplex frame header, a multiplex frame payload and a filling. After receiving a broadcasting channel frame consisting of a plurality of multiplex frames, the terminal de-multiplexes out ESG update indication and a network update indication carried in the multiplex frame header as shown in FIG. 2, wherein the ESG update indication is precisely ESG update sequence number while the network update indication is precisely a network information table update sequence number;
Step 102: when receiving an ESG again, the terminal judging whether a condition for complete ESG update is met or not according to time information about receiving the ESG this time and the time information about receiving the ESG last time stored in the terminal, if yes, executing step 103' of completely updating the ESG stored therein to the ESG received this time; otherwise, executing step 103;
Step 103: judging whether a value of ESG update indication carried in the ESG received this time is the same with that of ESG update indication in the ESG stored therein or not, if yes, executing step 104' of directly reading, using the ESG information stored in the terminal and considering it as the currently available ESG information; otherwise, executing step 104.
Step 104: updating the ESG table and/or sub-table of the terminal that have changed according to an ESG basic description table.
Step 105: after finishing the above judgment and comparison, the terminal always needing to update the time information stored therein to the time information of the ESG received this time no matter the ESG in the terminal is to be updated or not.

Wherein, the condition for complete ESG update is: a value of the difference between the time information of the ESG received by the terminal again and the time information of the ESG received last time stored in the terminal is greater than a threshold predefined in the terminal, or the time information of the ESG received by the terminal again and the time information of the ESG received last time stored in the terminal are located at two sides of an updating time critical point predefined in the terminal. When predefining the above threshold or the updating time critical point, reference may be made to the arranging plan of the ESG, for example, if programs are arranged in terms of today, tomorrow and the day after tomorrow, then the threshold may be set as 24 hours and the updating time critical point may be set as 0 o' clock (00:00).

In order to ensure that the terminal will not miss reception of ESG or receive an ESG wrongly due to roaming, the step 102 may further comprise a step of judging whether the place where the terminal is located has changed or not before comparing the two time information, i.e., judging whether the home location of the ESG has changed or not by comparing the value of the network update indication carried in the ESG received by the terminal this time with the value of the network update indication in the ESG stored therein, if they are different, it is indicated that the location of the terminal has changed, then the terminal completely updates the ESG stored therein to the ESG received this time, ending; otherwise, it is indicated that the location of the ESG does not change, the terminal executes the subsequent judgment made on the two time information.

As may be seen, the present invention can efficiently implement ESG update on a terminal. This example solves the problem existing in the current ESG update technique and improves this technique, and also improves the efficiency of ESG update.

The present invention will be further described by taking a case that a terminal is powered on again after being powered off as an example.

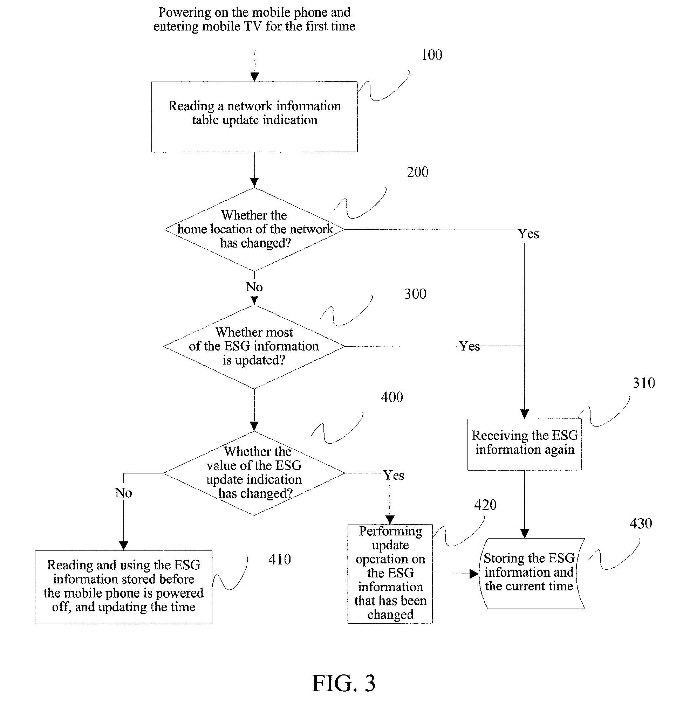

As shown in FIG. 3, the method for ESG update on a terminal comprises the following steps of:
Step 100, storing the current ESG information and the time at which the ESG is received/updated for the last time in the memory of the mobile phone when the mobile phone is powered off; powering on the mobile phone and entering mobile TV services, reading the network information table update sequence number in the ESG after receiving the ESG;
Step 200, the mobile phone terminal de-multiplexing a network information table with a table identification number of 0x01 from the multiplex payload of a multiplex frame with a service identifier of 0, and comparing it with the network information table update sequence number of the ESG stored in the mobile phone terminal to judge whether the home location of the network has changed or not;

If the home location of the network has changed, it is indicated that the charging for the mobile TV programs is changed, and most of the ESG information is generally updated, entering step 310; otherwise, entering step 300.
Step 310, after completely re-receiving the ESG information and finishing ESG analysis through ESG reception, the mobile phone terminal displaying the ESG information, meanwhile needing to store the corresponding ESG information and the current system time at which the ESG information is obtained; considering that it will take much time to store them in the memory, they can be temporarily stored in the data structure of the files, and then are collectively written into the memory when the mobile phone is powered off, ending;
Step 300, judging whether the value of the difference between the time information of the ESG received after powering on this time and the time information stored before the mobile phone is powered off is greater than 24 hours or the time information is located at two sides of 0 o' clock, if yes, it is indicated that most of the ESG has been updated, in which case directly re-reception is the easiest and most efficient mode, entering step 310; otherwise, entering step 400.
Step 400, the terminal de-multiplexing the multiplex frame header to check the ESG update sequence number of the multiplex frame header as shown in FIG. 2 to judge whether it has changed or not; if it has changed, entering step 420; otherwise entering step 410;
Step 410, if the ESG update sequence number does not change, it being indicated that the ESG is not updated, then reading the ESG information stored before the mobile phone is powered off as the current ESG information, and displaying the ESG information, in which case, the time information about receiving the ESG needs to be updated to the current time, ending.
Step 420: if the ESG update sequence number has changed, it being indicated that the ESG has been updated; the mobile phone terminal de-multiplexing an ESG basic description table with a table identification number of 0x06 from the multiplex payload of the multiplex frame with a service identifier of 0; determining which ESG tables or sub-tables have been updated by comparing the ESG basic description table with the ESG basic description table stored in the memory of the mobile phone, and performing updating processing on the ESG tables and sub-tables that have been updated; meanwhile needing to store the corresponding ESG information and the current system time at which the ESG information is obtained.
Step 430: when the mobile phone is powered off, writing the ESG information possessed for the last time and the time of update into the memory of the mobile phone so that they can be used for updating ESG when the mobile phone is powered on next time.

In the above steps, the current system time always needs to be recorded when the ESG information is received or updated at each time, and the system time is written into a specified position in the memory of the mobile phone when the mobile phone is powered off; if there is a record of the corresponding time already in the specified position of the memory, then the record is directly overwritten.

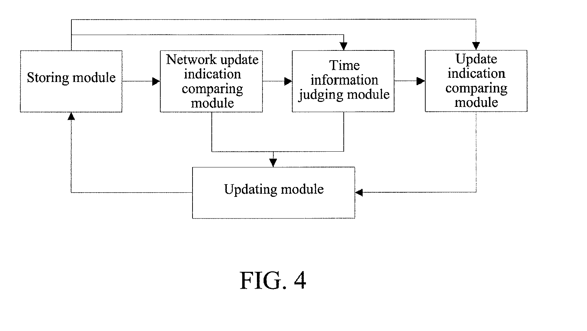

The terminal for implementing ESG update is as shown in FIG. 4, comprising a storing module, an updating module, a time information judging module and an update indication judging module, wherein,
the storing module is used to store an ESG and time information about receiving the ESG this time after receiving the ESG; also to store updated ESG and ESG time information;
the updating module is used to update the ESG stored therein to an ESG received this time after receiving an updating command; and also used to update the time information stored therein to the time information of the ESG received this time;
the time information judging module is used to judge whether the condition for complete ESG update is met according to the time information about receiving an ESG this time and time information about receiving an ESG last time stored in the terminal, if yes, sending the updating command to the updating module; otherwise, sending a judging command to the update indication judging module. Wherein, the condition for complete ESG update is: a value of the difference between the time information of the ESG received by the terminal and the time information of the ESG received last time stored in the storing module is greater than a threshold predefined in the terminal, or the time information of the ESG received by the terminal again and the time information of the ESG received last time stored in the storing module are located at two sides of an updating time critical point predefined in the terminal.
the update indication judging module is used to compare a value of an ESG update indication carried in the ESG received this time with a value of an ESG update instruction in the ESG stored in the storing module after receiving the judging command, and sending the updating command to the updating module if the two values are the same.

The terminal further comprises a network update indication judging module.

The network update indication judging module is used to judge whether the value of a network update indication carried in the ESG received by the terminal this time and the value of a network update instruction in the ESG stored in the storing module that is received last time are the same or not, and if they are not the same, the network update indication judging module is used to send the updating command to the updating module; otherwise, the network update indication judging module is used to send a judging command to the time information judging module to instruct the time information judging module to perform subsequent judgment.

Of course, the present invention may have many other examples, and a person having ordinary skill in the art can make various corresponding modifications and transformations according to the present invention without departing from the spirit and essence of the present invention, but such corresponding modifications and transformations shall fall into the protection scope of the present invention defined by the attached claims.

### Industrial Applicability

The present invention fully uses the network information table update sequence number field and ESG update sequence number field in CMMB standards to confirm whether the home location network has changed or the ESG information has been updated; meanwhile, an efficient updating strategy is achieved between partial update and complete update based on the extent to which the ESG information is updated, which does not only avoid time consumption for ESG information reception and analysis caused by complete re-reception/update when the ESG information is only partially updated, but also avoid repeated comparison work on the ESG basic description table when most part of the ESG information is updated, thus efficiently achieving operation of ESG update of the terminal. Therefore, the present invention has a high industrial applicability.

## Claims

1. A method for implementing update of mobile multimedia broadcasting Electronic Service Guide (ESG), comprising the following steps of:
upon receiving an ESG, a terminal storing the ESG and time information about receiving the ESG this time;
when receiving an ESG again, the terminal judging whether a condition for complete ESG update is met or not according to time information about receiving the ESG this time and the time information about receiving the ESG last time stored in the terminal, if yes, the terminal completely updating the ESG stored therein to the ESG received this time; otherwise the terminal judging whether a value of an ESG update indication carried in the ESG is the same with that of an ESG update instruction in the ESG stored therein or not, if not, updating ESG information that has changed in the terminal.

2. The method according to claim 1, after the terminal completely updating the ESG stored therein to the ESG received this time or after updating the ESG information that has changed in the terminal, the method further comprising the following step of:
the terminal updating the time information stored therein to the time information of the ESG received this time.

3. The method according to claim 1 or 2, wherein,
the condition for complete ESG update is: a value of the difference between the time information of the ESG received by the terminal again and the time information of the ESG received last time stored in the terminal is greater than a threshold predefined in the terminal, or
the time information of the ESG received by the terminal again and the time information of the ESG received last time stored in the terminal are located at two sides of an updating time critical point predefined in the terminal.

4. The method according to claim 1 or 2, before the terminal judges whether a condition for complete ESG update is met or not according to time information about receiving the ESG this time and the time information about receiving the ESG last time stored in the terminal when receiving an ESG again, the method further comprising the following steps of:
the terminal judging whether a value of a network update indication carried in the ESG received this time is the same with that of a network update instruction carried in the ESG stored therein that is received last time, if yes, the terminal executing the step of judging whether the time information about receiving the ESG this time and the time information about receiving the ESG last time stored in the terminal meet the condition for complete ESG update or not; otherwise, the terminal completely updating the ESG stored therein to the ESG received this time and ending the method.

5. The method according to claim 4, comprising the following steps of:
the terminal not updating the ESG stored therein if the terminal determines that the value of the ESG update indication carried in the ESG is the same with that of the ESG update indication in the ESG stored therein, using the ESG stored in the terminal, and the terminal updating the time information stored therein to the time information of the ESG received this time.

6. The method according to claim 3, wherein,
the threshold predefined in the terminal is 24 hours, and the updating time critical point is 0 o'clock.

7. A terminal for implementing update of a mobile multimedia broadcasting Electronic Service Guide (ESG), comprising a storing module, an updating module, a time information judging module and an update indication judging module, wherein,
the storing module is used to store an ESG and time information about receiving the ESG this time after receiving the ESG; also used to store an updated ESG;
the updating module is used to completely update the ESG stored therein to an ESG received this time after receiving an updating command;
the time information judging module is used to judge whether the condition for complete ESG update is met according to the time information about receiving an ESG this time and time information about receiving an ESG last time stored in the terminal, if yes, sending the updating command to the updating module; otherwise, sending a judging command to the update indication judging module;
the update indication judging module is used to judge whether a value of an ESG update indication carried in the ESG received this time is the same with that of an ESG update indication in the ESG stored therein that is received last time after receiving the judging command, and sending the updating command to the updating module if determining that the values are not the same.

8. The terminal according to claim 7, wherein,
the updating module is also used to update the time information stored therein to the time information of the ESG received this time;
the storing module is also used to store time information of an updated ESG.

9. The terminal according to claim 7 or 8, wherein,
the condition for complete ESG update is: a value of the difference between the time information of the ESG received by the terminal again and the time information of the ESG received last time stored in the terminal is greater than a threshold predefined in the terminal, or the time information of the ESG received by the terminal again and the time information of the ESG received last time stored in the terminal are located at two sides of an updating time critical point predefined in the terminal.

10. The terminal according to claim 7 or 8, wherein, the terminal further comprises a network update indication judging module; the network update indication judging module is used to compare the value of a network update indication carried in the ESG received by the terminal this time with the value of a network update indication in the ESG stored therein, and if the two values are not the same, the network update indication judging module is used to send the updating command to the updating module; otherwise, the network update indication judging module is used to send a judging command to the time information judging module to instruct the time information judging module to perform subsequent judgment.

11. The terminal according to claim 9, wherein,
the threshold predefined in the terminal is 24 hours, and the updating time critical point is 0 o'clock.
